# EUROPEAN PATENT SPECIFICATION

(11) **EP 1 784 962 B1**
(45) Date of publication and mention of the grant of the patent: **08.04.2015**
(21) Application number: 05775235.4
(22) Date of filing: 26.07.2005
(51) Int. Cl.: G10L 15/26, H04W 4/18

(54) **SYSTEM, METHOD, AND COMPUTER PROGRAM PRODUCT FOR CONTENT DELIVERY IN A PUSH-TO-TALK COMMUNICATION SYSTEM**
SYSTEM, VERFAHREN UND COMPUTERPROGRAMMPRODUKT ZUR INHALTSABLIEFERUNG IN EINEM PUSH-TO-TALK-KOMMUNIKATIONSSYSTEM
SYSTEME, PROCEDE ET PROGRAMME INFORMATIQUE POUR LA FOURNITURE DE CONTENU DANS UN SYSTEME DE COMMUNICATION A COMMUTATEUR DE PAROLE

(30) Priority: 01.09.2004 US 931790
(43) Date of publication of application: 16.05.2007
(73) Proprietor: HEWLETT-PACKARD DEVELOPMENT COMPANY, L.P., Houston, TX 77070 (US)
(72) Inventor: HUSSAIN, Mohammed, S., Amherst, NY 14228 (US)
(74) Representative: Jacoby, Georg
(86) International application number: PCT/US2005/026379
(87) International publication number: WO 2006/028593

(56) References cited:
- US-B1- 6 426 956
- TELTARIFE DE: "Nokia 5140: Erstes GSM-Handy mit Push-to-Talk-Funktion" NOKIA, 12 November 2003 (2003-11-12), XP002327741

## Description

### TECHNICAL FIELD OF THE INVENTION

The present invention is directed, in general, to wireless communications systems.

### BACKGROUND OF THE INVENTION

Automated telephone systems are well known in the art. After a caller has connected to an automated system via telephone, the system accepts DTMF (Dual Tone MultiFrequency) keypress entries to allow the caller to navigate the voice prompts, choose actions, and request content delivery. These systems can generally be operated using any telephone, wired or wireless.

Newer known systems expand on these by adding voice recognition and navigation. In these systems, users can call into an automated system, then respond to voice prompts using simple spoken responses. In this way, the user can conveniently navigate the automated system using only (or primarily) spoken commands.

These common systems, however, generally only allow interaction with specific, customized voice automation systems, and not with other general data processing system applications. Further, the content available on most common systems is limited to pre-defined, stored or recorded content, with no up-to-the-moment or customizable content available to the user.

US 6,423,956 B1 discloses a content delivery system that receives a push to talk message from a subscriber unit in form of data packets that include a header with an application server address and a voice frame. The server system converts the voice frame in a computer readable request and transmits it to the application server according the application server address in the header. After receiving the request from the server system the application server delivers the desired content to the subscriber unit.

The document TELTARIFE DE: "Nokia 5140: Erstes GSM-Handy mit Push-to-TalkFunktion", NOKIA, 12 November 2003, XP002327741 shows a mobile phone with a Push-to-Talk-Functionality.

There is, therefore, a need in the art for a system, method, and computer program product for facilitating the user selection of a target application in a real-time content delivery in a communication system.

### SUMMARY OF THE INVENTION

A preferred embodiment provides a system, method, and computer program product for real-time content delivery in a communication system utilizing push-to-talk wireless capabilities for voice interaction with a wide range of data processing system applications. By utilizing a vocalizer voice-to-text translation system, various embodiments allow real-time, push-to-talk interaction with conventional voice-response systems, conventional data processing system applications, and other text-based applications such as instant-messaging applications.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art will appreciate that they may readily use the conception and the specific embodiment disclosed as a basis for modifying or designing other structures for carrying out the same purposes of the present invention. Those skilled in the art will also realize that such equivalent constructions do not depart from the spirit and scope of the invention in its broadest form.

Before undertaking the DETAILED DESCRIPTION OF THE INVENTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:
Figure 1 depicts a block diagram of a data processing system in which a preferred embodiment can be implemented;
Figure 2 depicts a block diagram of a system in accordance with a preferred embodiment; and
Figure 3 depicts a flowchart of a process in accordance with a preferred embodiment.

### DETAILED DESCRIPTION OF THE INVENTION

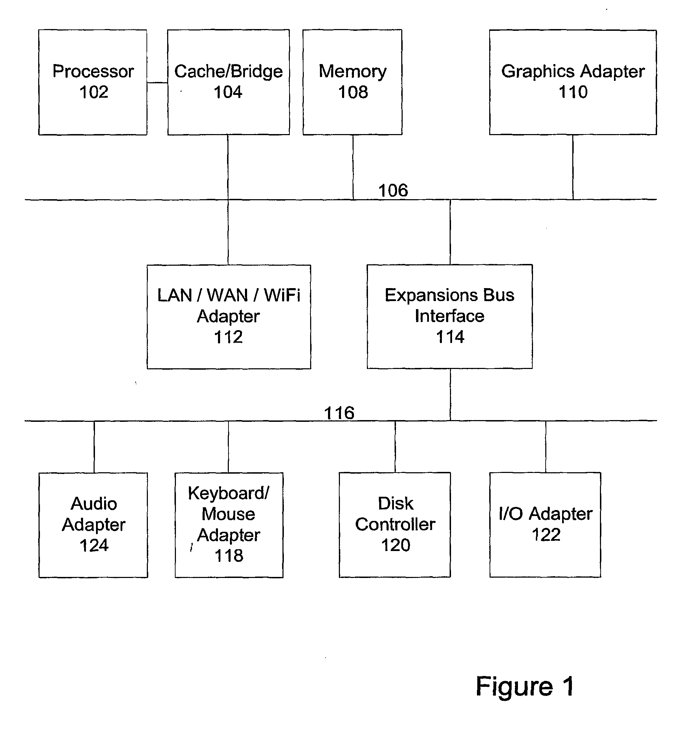

FIGURES 1 through 3, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged wireless or mobile computing device. The numerous innovative teachings of the present application will be described with particular reference to the presently preferred embodiment.

Figure 1 depicts a block diagram of a data processing system in which a preferred embodiment can be implemented. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110.

Other peripherals, such as local area network (LAN) / Wide Area Network / Wireless (*e.g.* WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular. For example, other peripheral devices, such as an optical disk drive and the like, also may be used in addition or in place of the hardware depicted. The depicted example is provided for the purpose of explanation only and is not meant to imply architectural limitations with respect to the present invention.

A preferred embodiment provides a system, method, and computer program product for real-time content delivery in a communication system utilizing push-to-talk wireless capabilities for voice interaction with a wide range of data processing system applications. By utilizing a vocalizer voice-to-text translation system, various embodiments allow real-time, push-to-talk interaction with conventional voice-response systems, conventional data processing system applications, and other text-based applications such as instant-messaging applications.

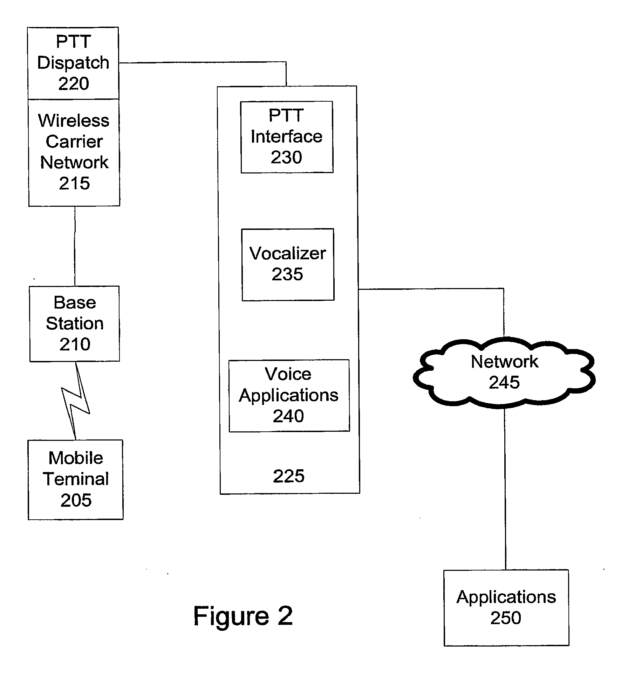

Figure 2 depicts a block diagram of a system in accordance with a preferred embodiment. In this figure, mobile terminal 205 can be any known voice capable wireless device with push-to-talk capabilities, such as many wireless telephones known to those of skill in the art. Mobile terminal 205, in a conventional manner, communicates with base station 210 and wireless carrier network 215. Methods and systems for communications in a wireless carrier network, including push-to-talk, "walkie-talkie" type communications such as Nextel Direct Connect, are well known to those of skill in the art.

Wireless carrier network 215 integrates with a push-to-talk (PTT) dispatch 220. PTT dispatch 220 communicates with system 225, which includes PTT interface 230, vocalizer 235, and voice applications 240. System 225 communicates over network 245, which can be any known public or private network or combination thereof, with applications 250.

In this embodiment, system 225 provides an interface between PTT voice transmissions originating from mobile terminal 205, and voice applications 240 and applications 250. Vocalizer 235 is a voice-to-text translation system, which translates voice PTT communications to and from mobile terminal 205 with text-based communications required by applications 250. Voice applications 240 include voice-response applications as known to those of skill in the art, and don't necessarily require translation by vocalizer 235.

System 225, in some embodiments, is implemented in a data processing system such as that depicted in Figure 1.

PTT interface 230 manages transactions between PTT voice transmissions and applications 250. Applications 250 can include virtually any application accessible and usable over a network, with PTT interface 230 managing communications between them.

A particular function of PTT interface 230 is management of PTT-compatible communications themselves. When a PTT transmission is addressed to system 225, in a known fashion as if system 225 were another PTT-enabled mobile terminal, PTT interface 230 receives the PTT voice transmission. PTT interface 230 determines whether the target application of the PTT voice transmission requires a voice input or text input, and performs any necessary translations using vocalizer 235. The transmission is then delivered to the target application.

When a response is directed from the target application 250 or 240 to the mobile terminal 205, PTT interface 230 will first translate any text response into a voice response, as necessary, using vocalizer 235. Next, PTT interface 230 will initiate a PTT transmission to PTT dispatch 220 and wireless carrier network 215, directed to mobile terminal 205.

In this manner, the user can have real-time interaction with a target application, and receive a real-time response as soon as it is available, without having to maintain a dedicated voice connection for the entire duration of the interaction. Instead, using PTT technology, the user can sent a PTT transmission, and any response will automatically be delivered using a PTT response.

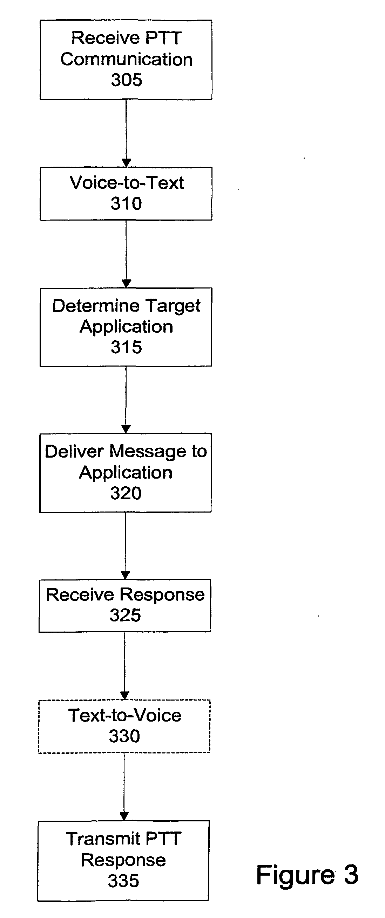

Figure 3 depicts a flowchart of a process in accordance with a preferred embodiment. According to this process, the system will receive a PTT voice transmission from a user, as received by a wireless carrier in a conventional manner (step 305). The system will perform a voice-to-text translation (step 310) to obtain a data request corresponding to the PTT voice transmission. Note that this data request can be, but is not necessarily, an actual full text translation of the PTT voice transmission.

Next, the system will determine the target application of the PTT voice transmission (step 315). The target can be determined from the contents of the data request, or it can depend on the addressing of the original PTT transmission, or otherwise. The system will deliver a message corresponding to the data request to the target application (step 320).

Upon receiving an application response from the target application (step 325), the system will, if necessary, perform a text-to-speech translation on the application response (step 330). Of course, if the target application itself provided a voice response, then no such translation is necessary.

Finally, the system will transmit a response message to the user, to be delivered using a real-time PTT-type delivery (step 335). The response message will correspond to the application response from the target application, or the text-to-speech translation of that response. Depending on configuration, the system can transmit this response directly to the user, or can simply deliver it to the wireless carrier to be transmitted.

Those skilled in the art will recognize that, for simplicity and clarity, the full structure and operation of all data processing systems suitable for use with the present invention is not being depicted or described herein. Instead, only so much of a data processing system as is unique to the present invention or necessary for an understanding of the present invention is depicted and described. The remainder of the construction and operation of data processing system 100 may conform to any of the various current implementations and practices known in the art.

It is important to note that while the present invention has been described in the context of a fully functional system, those skilled in the art will appreciate that at least portions of the mechanism of the present invention are capable of being distributed in the form of instructions contained within a machine usable medium in any of a variety of forms, and that the present invention applies equally regardless of the particular type of instruction or signal bearing medium utilized to actually carry out the distribution. Examples of machine usable mediums include: nonvolatile, hard-coded type mediums such as read only memories (ROMs) or erasable, electrically programmable read only memories (EEPROMs), user-recordable type mediums such as floppy disks, hard disk drives and compact disk read only memories (CD-ROMs) or digital versatile disks (DVDs), and transmission type mediums such as digital and analog communication links.

Although an exemplary embodiment of the present invention has been described in detail, those skilled in the art will understand that various changes, substitutions, variations, and improvements of the invention disclosed herein may be made without departing from scope of the invention in its broadest form.

## Claims

1. A method of delivering content over a push-to-talk wireless network, comprising:
receiving (305) a voice transmission from a user, the voice transmission originating as a push-to-talk transmission;
performing a voice-to-text translation of the voice transmission (310) to product a data request, wherein the voice transmission includes information identifying a target application;
determining the target application (315) from the contents of the data request corresponding to the voice transmission;
delivering a message (320), corresponding to the data request, to the target application;
receiving an application response (325), corresponding to the data request, from the target application; and
transmitting a response message (335), corresponding to the application response, to be delivered to the user as a push-to-talk transmission.

2. The method of claim 1, or the data processing system of claim 6, or the computer program product of claim 7, wherein the voice-to-text translation is a complete text translation of the voice transmission.

3. The method of claim 1, further comprising performing a text-to-speech translation of the application response to produce the response message; or
the data processing system of claim 6, further comprising means for performing a text-to-speech translation of the application response to produce the response message; or
the computer program product of claim 7, further comprising instructions for performing a text-to-speech translation of the application response to produce the response message.

4. The method of claim 1, wherein transmitting the response message includes delivering the response message to a wireless carrier for wireless transmission to the user; or
the data processing system of claim 6, wherein means for transmitting the response message includes means for delivering the response message to a wireless carrier for wireless transmission to the user; or
the computer program product of claim 7, wherein the instructions for transmitting the response message includes instructions for delivering the response message to a wireless carrier for wireless transmission to the user.

5. The method of claim 1, wherein receiving the voice transmission includes receiving the voice transmission from a wireless carrier, the wireless carrier having received the voice transmission over a wireless connection; or
the data processing system of claim 6, wherein means for receiving the voice transmission includes means for receiving the voice transmission from a wireless carrier, the wireless carrier having received the voice transmission over a wireless connection; or
the computer program product of claim 7, wherein the instructions for receiving the voice transmission includes instructions for receiving the voice transmission from a wireless carrier, the wireless carrier having received the voice transmission over a wireless connection.

6. A data processing system having at least a processor and accessible memory, comprising:
means for receiving a voice transmission from a user, the voice transmission originating as a push-to-talk transmission;
means for performing a voice-to-text translation of the voice transmission to product a data request, wherein the voice transmission includes information identifying a target application;
means for determining the target application from the contents of the data request corresponding to the voice transmission;
means for delivering a message, corresponding to the data request, to the target application;
means for receiving an application response, corresponding to the data request, from the target application; and
means for transmitting a response message, corresponding to the application response, to be delivered to the user as a push-to-talk transmission.

7. A computer program product tangibly embodied in a machine-readable medium, comprising:
instructions for receiving a voice transmission from a user, the voice transmission originating as a push-to-talk transmission;
instructions for performing a voice-to-text translation of the voice transmission to product a data request, wherein the voice transmission includes information identifying a target application;
instructions for the target application from the contents of the data request corresponding to the voice transmission;
instructions for delivering a message, corresponding to the data request, to the target application;
instructions for receiving an application response, corresponding to the data request, from the target application; and
instructions for transmitting a response message, corresponding to the application response, to be delivered to the user as a push-to-talk transmission.

## Patentansprüche

1. Verfahren zum Liefern von Inhalt über ein drahtloses Push-to-Talk-Netzwerk, umfassend:
Empfangen (305) einer Sprachübertragung von einem Benutzer, wobei die Sprachübertragung einer Push-to-Talk-Übertragung entstammt;
Durchführen einer Sprache-zu-Text-Übersetzung der Sprachübertragung (310), um eine Datenanfrage zu erzeugen, wobei die Sprachübertragung Informationen enthält, die eine Zielanwendung ausweisen;
Bestimmen der Zielanwendung (315) aus den Inhalten der Datenanfrage, die der Sprachübertragung entspricht;
Liefern einer Nachricht (320), die der Datenanfrage entspricht, an die Zielanwendung;
Empfangen einer Anwendungsantwort (325), die der Datenanfrage entspricht, von der Zielanwendung; und
Übertragen einer Antwortnachricht (355), die der Anwendungsantwort entspricht, zum Liefern an den Benutzer als Push-to-Talk-Übertragung.

2. Verfahren nach Anspruch 1 oder Datenverarbeitungssystem nach Anspruch 6 oder Computerprogrammprodukt nach Anspruch 7, wobei die Sprache-zu-Text-Übersetzung eine vollständige Textübersetzung der Sprachübertragung ist.

3. Verfahren nach Anspruch 1, ferner umfassend das Durchführen einer Text-zu-Sprache-Übersetzung der Anwendungsantwort, um die Antwortnachricht zu erzeugen; oder
Datenverarbeitungssystem nach Anspruch 6, ferner umfassend ein Mittel zum Durchführen einer Text-zu-Sprache-Übersetzung der Anwendungsantwort, um die Antwortnachricht zu erzeugen; oder
Computerprogrammprodukt nach Anspruch 7, ferner umfassend Anweisungen zum Durchführen einer Text-zu-Sprache-Übersetzung der Anwendungsantwort, um die Antwortnachricht zu erzeugen.

4. Verfahren nach Anspruch 1, wobei das Übertragen der Antwortnachricht das Liefern der Antwortnachricht an einen Mobilfunkanbieter für die drahtlose Übertragung an den Benutzer beinhaltet; oder
Datenverarbeitungssystem nach Anspruch 6, wobei ein Mittel zum Übertragen der Antwortnachricht ein Mittel zum Liefern der Antwortnachricht an einen Mobilfunkanbieter für die drahtlose Übertragung an den Benutzer beinhaltet; oder
Computerprogrammprodukt nach Anspruch 7, wobei die Anweisungen zum Übertragen der Antwortnachricht Anweisungen zum Liefern der Antwortnachricht an einen Mobilfunkanbieter für die drahtlose Übertragung an den Benutzer beinhalten.

5. Verfahren nach Anspruch 1, wobei das Empfangen der Sprachübertragung das Empfangen der Sprachübertragung von einem Mobilfunkanbieter beinhaltet, wobei der Mobilfunkanbieter die Sprachübertragung über eine drahtlose Verbindung empfangen hat; oder
Datenverarbeitungssystem nach Anspruch 6, wobei ein Mittel zum Empfangen der Sprachübertragung ein Mittel zum Empfangen der Sprachübertragung von einem Mobilfunkanbieter beinhaltet, wobei der Mobilfunkanbieter die Sprachübertragung über eine drahtlose Verbindung empfangen hat; oder
Computerprogrammprodukt nach Anspruch 7, wobei die Anweisungen zum Empfangen der Sprachübertragung Anweisungen zum Empfangen der Sprachübertragung von einem Mobilfunkanbieter beinhalten, wobei der Mobilfunkanbieter die Sprachübertragung über eine drahtlose Verbindung empfangen hat.

6. Datenverarbeitungssystem mit mindestens einem Prozessor und einem Speicher, auf den zugegriffen werden kann, umfassend:
Mittel zum Empfangen einer Sprachübertragung von einem Benutzer, wobei die Sprachübertragung einer Push-to-Talk-Übertragung entstammt;
Mittel zum Durchführen einer Sprache-zu-Text-Übersetzung der Sprachübertragung, um eine Datenanfrage zu erzeugen, wobei die Sprachübertragung Informationen enthält, die eine Zielanwendung ausweisen;
Mittel zum Bestimmen der Zielanwendung aus den Inhalten der Datenanfrage, die der Sprachübertragung entspricht;
Mittel zum Liefern einer Nachricht, die der Datenanfrage entspricht, an die Zielanwendung;
Mittel zum Empfangen einer Anwendungsantwort, die der Datenanfrage entspricht, von der Zielanwendung; und
Mittel zum Übertragen einer Antwortnachricht, die der Anwendungsantwort entspricht, zum Liefern an den Benutzer als Push-to-Talk-Übertragung.

7. Computerprogrammprodukt, greifbar umgesetzt in einem maschinenlesbaren Medium, umfassend:
Anweisungen zum Empfangen einer Sprachübertragung von einem Benutzer, wobei die Sprachübertragung einer Push-to-Talk-Übertragung entstammt;
Anweisungen zum Durchführen einer Sprache-zu-Text-Übersetzung der Sprachübertragung, um eine Datenanfrage zu erzeugen, wobei die Sprachübertragung Informationen enthält, die eine Zielanwendung ausweisen;
Anweisungen für die Zielanwendung aus den Inhalten der Datenanfrage, die der Sprachübertragung entspricht;
Anweisungen zum Liefern einer Nachricht, die der Datenanfrage entspricht, an die Zielanwendung;
Anweisungen zum Empfangen einer Anwendungsantwort, die der Datenanfrage entspricht, von der Zielanwendung; und
Anweisungen zum Übertragen einer Antwortnachricht, die der Anwendungsantwort entspricht, zum Liefern an den Benutzer als Push-to-Talk-Übertragung.

## Revendications

1. Procédé de distribution d'un contenu sur un réseau sans fil de messagerie vocale instantanée, comprenant :
la réception (305) d'une transmission vocale à partir d'un utilisateur, la transmission vocale provenant d'une transmission de messagerie vocale instantanée ;
la réalisation d'une traduction voix-à-texte de la transmission vocale (310) pour produire une requête de données, la transmission vocale comprenant des informations identifiant une application cible ;
la détermination de l'application cible (315) à partir des contenus de la requête de données correspondant à la transmission vocale ;
la distribution d'un message (320), correspondant à la requête de données, à l'application cible ;
la réception d'une réponse d'application (325), correspondant à la requête de données, en provenance de l'application cible ; et
la transmission d'un message de réponse (335), correspondant à la réponse d'application, à distribuer à l'utilisateur sous forme de transmission de messagerie vocale instantanée.

2. Procédé selon la revendication 1, ou système de traitement de données selon la revendication 6, ou produit programme d'ordinateur selon la revendication 7, dans lequel la traduction voix-à-texte est une traduction en texte complète de la transmission vocale.

3. Procédé selon la revendication 1, comprenant en outre la réalisation d'une traduction texte-à-parole de la réponse d'application pour produire le message de réponse ; ou
système de traitement de données selon la revendication 6, comprenant en outre un moyen pour réaliser une traduction texte-à-parole de la réponse d'application pour produire le message de réponse ; ou
produit programme d'ordinateur selon la revendication 7, comprenant en outre des instructions pour réaliser une traduction texte-à-parole de la réponse d'application pour produire le message de réponse.

4. Procédé selon la revendication 1, dans lequel la transmission du message de réponse comprend la distribution du message de réponse à une porteuse sans fil pour une transmission sans fil à l'utilisateur ; ou
système de traitement de données selon la revendication 6, dans lequel le moyen pour transmettre le message de réponse comprend un moyen pour distribuer le message de réponse à une porteuse sans fil pour une transmission sans fil à l'utilisateur ; ou
produit programme d'ordinateur selon la revendication 7, dans lequel les instructions pour transmettre le message de réponse comprend des instructions pour distribuer le message de réponse à une porteuse sans fil pour une transmission sans fil à l'utilisateur.

5. Procédé selon la revendication 1, dans lequel la réception de la transmission vocale comprend la réception de la transmission vocale en provenance d'une porteuse sans fil, la porteuse sans fil ayant reçu la transmission vocale sur une connexion sans fil ; ou
système de traitement de données selon la revendication 6, dans lequel le moyen pour recevoir la transmission vocale comprend un moyen pour recevoir la transmission vocale en provenance d'une porteuse sans fil, la porteuse sans fil ayant reçu la transmission vocale sur une connexion sans fil ; ou
produit programme d'ordinateur selon la revendication 7, dans lequel les instructions pour recevoir la transmission vocale comprennent des instructions pour recevoir la transmission vocale en provenance d'une porteuse sans fil, la porteuse sans fil ayant reçu la transmission vocale sur une connexion sans fil.

6. Système de traitement de données ayant au moins un processeur et une mémoire accessible, comprenant :
des moyens pour recevoir une transmission vocale d'un utilisateur, la transmission vocale provenant d'une transmission de messagerie vocale instantanée ;
des moyens pour réaliser une traduction voix-à-texte de la transmission vocale pour produire une requête de données, la transmission vocale comprenant des informations identifiant une application cible ;
des moyens pour déterminer l'application cible à partir des contenus de la requête de données correspondant à la transmission vocale ;
des moyens pour distribuer un message, correspondant à la requête de données, à l'application cible ;
des moyens pour recevoir une réponse d'application, correspondant à la requête de données, en provenance de l'application cible ; et
des moyens pour transmettre un message de réponse, correspondant à la réponse d'application, à distribuer à l'utilisateur sous forme de transmission de messagerie vocale instantanée.

7. Produit programme d'ordinateur mis en oeuvre de façon tangible dans un support lisible par ordinateur, comprenant :
des instructions pour recevoir une transmission vocale d'un utilisateur, la transmission vocale provenant d'une transmission de messagerie vocale instantanée ;
des instructions pour réaliser une traduction voix-à-texte de la transmission vocale pour produire une requête de données, la transmission vocale comprenant des informations identifiant une application cible ;
des instructions pour l'application cible provenant des contenus de la requête de données correspondant à la transmission vocale ;
des instructions pour distribuer un message, correspondant à la requête de données, à l'application cible ;
des instructions pour recevoir une réponse d'application, correspondant à la requête de données, en provenance de l'application cible ; et
des instructions pour transmettre un message de réponse, correspondant à la réponse d'application, à distribuer à l'utilisateur sous forme de transmission de transmission vocale instantanée.
